# EUROPÄISCHE PATENTANMELDUNG

(11) **EP 1 333 571 A2**
(43) Veröffentlichungstag der Anmeldung: **06.08.2003**
(21) Anmeldenummer: 03001834.5
(22) Anmeldetag: 29.01.2003
(51) Int. Cl.: H02P 3/04

(54) **Antrieb für ein Hebezeug mit einem drei Motorwicklungen aufweisenden Dreiphasendrehstrommotor**

(30) Priorität: 30.01.2002 DE 10204489
(71) Anmelder: Demag Cranes & Components GmbH, 58300 Wetter (DE)
(72) Erfinder: Appel, Erik, 96215 Lichtenfels (DE); Behnke, Klaus, 44143 Dortmund (DE); Biewald, Joachim, Dr., 58675 Hemer (DE); Freitag, Holger, 44894 Bochum (DE); Koepke, Michael, 58300 Wetter (DE); Persico, Giuliano, 58300 Wetter (DE); Plegge, Frank, 58453 Witten (DE); Reetz, Torsten, 58135 Hagen (DE)
(74) Vertreter: Moser, Jörg Michael, Dipl.-Ing.

(57) **Zusammenfassung**

Die Erfindung betrifft einen Antrieb für ein Hebezeug mit einem drei Motorwicklungen (2a, 2b) aufweisenden Dreiphasendrehstrommotor, mit einer Drehstromversorgung, deren drei Phasen (5, 6, 7) an die in einem Sternpunkt (3a, 3b) zusammengeschalteten drei Motorwicklungen (2a, 2b) anschließbar sind, und mit einer elektrisch ansteuerbaren mechanischen Motorbremse . Um die Last insbesondere bei Phasenausfall oder Wicklungsunterbrechung durch die Motorbremse stets sicher zu halten, wird vorgeschlagen, dass eine Vergleichsschaltung (12) vorgesehen ist, welche die Spannung am Stempunkt (3a, 3b) jeweils mit einer von den Motorwicklungen (2a, 2b) unabhängigen Referenzspannung vergleicht und bei Überschreiten eines vorgegebenen Schwellwerts die Motorbremse einschaltet.

## Beschreibung

Die Erfindung betrifft einen Antrieb für ein Hebezeug mit einem drei Motorwicklungen aufweisenden Dreiphasendrehstrommotor gemäß dem Oberbegriff des Anspruchs 1.

Es ist bekannt, Antriebe für Hebezeuge mit Drehstrommotoren zu versehen, die drei Motorwicklungen aufweisen, welche an die drei Phasen einer Drehstromversorgung anschließbar sind. Eine häufig verwendete Zusammenschaltung der drei Motorwicklungen ist die, bei der je ein Motorwicklungsanschluss der Motorwicklungen in einem Sternpunkt verbunden sind. Beim Dreiphasendrehstrommotor kann es sich insbesondere um einen polumschaltbaren Motor handeln.

Derartige Antriebe sind im allgemeinen mit einer elektrisch ansteuerbaren mechanischen Motorbremse versehen. Beim Lüften der Motorbremse muss sichergestellt sein, dass der Dreiphasendrehstrommotor die Last am Hebezeug sicher halten kann.

Die Motorbremse ist deshalb so ausgeführt, dass ein Lüften der Bremse sicher verhindert wird, insbesondere bei Ausfall einer oder mehrerer Phasen oder bei Wicklungsbruch bzw. Wicklungsschluss. Dabei wird zur Ansteuerung der Motorbremse ein Bremsbaustein verwendet, wobei dieser an zwei der drei nicht am Stempunkt zusammengeschalteten Motorwicklungen angeschlossen wird, um bei Ausfall einer Phase ein Lüften zu verhindern. Die beiden Phasen werden dabei direkt aus der dreiphasigen Motordrehstromversorgung abgeleitet.

Der Nachteil dieser Lösung besteht darin, dass nur bei Ausfall zweier Phasen ein Lüften der Bremse verhindert wird, während beim Ausfall der dritten Phase oder bei Wicklungsbruch ein Lüften der Bremse erfolgen kann.

Die Aufgabe der Erfindung ist es, einen Antrieb für ein Hebezeug zu schaffen, bei dem die Last zumindest durch die Motorbremse stets sicher gehalten wird, insbesondere bei Phasenausfall oder Wicklungsunterbrechung.

Die Aufgabe wird durch die Merkmale des Anspruchs 1 gelöst. Die Unteransprüche enthalten vorteilhafte Ausgestaltungen des Antriebs.

Die Lösung sieht vor, dass eine Vergleichsschaltung vorgesehen ist, welche die Spannung am Stempunkt jeweils mit einer von den Motorwicklungen unabhängigen Referenzspannung vergleicht und bei Überschreiten eines vorgegebenen Schwellwerts die Motorbremse einschaltet. Die Verwendung der Vergleichschaltung stellt sicher, dass bei Ausfall einer der Phasen oder bei Wicklungsbruch ein Schaltsignal generiert wird, welches die Motorbremse einschaltet.

Eine technisch sehr einfache Ausführung sieht vor, dass die Referenzspannung die Spannung am Erdpunkt des Dreiphasendrehstrommotors ist.

Um die mit dem Erdpunkt verbundenen Nachteile zu vermeiden, wird vorgeschlagen, dass die Referenzspannung die Spannung eines zusätzlichen künstlichen Sternpunkts ist, der aus den drei Phasen der Stromversorgung gebildet wird, und dass zusätzlich eine Phasenausfallerkennung vorgesehen ist. Bei dieser Ausführung mittels eines künstlichen Stempunkts wird erreicht, dass bei Wicklungsbruch die Motorbremse sicher eingeschaltet wird, was durch zusätzliche Maßnahmen auch beim Phasenausfall erfolgt.

Zur Phasenausfallerkennung mit einem künstlichen Stempunkt wird vorgeschlagen, dass die Spannung von allen Phasen der Drehstromversorgung (5, 6, 7) überwacht und bei Ausfall die Motorbremse eingeschaltet wird.

Um mit einem einzigen Bremsbaustein auszukommen, wird vorgeschlagen, dass die Ergebnisse der Vergleiche mittels einer logischen Schaltung zusammengeführt sind, welche die Motorbremse bei Überschreiten oder Unterschreiten von mindestens einem Differenz- oder Schwellwert einschaltet.

Ein Ausführungsbeispiel der Erfindung wird nachfolgend anhand einer Zeichnung beschrieben. Es zeigen:
Fig. 1 eine Bremsansteuerung, bei der als Referenzspannung die Spannung am Erdpunkt des Dreiphasendrehstrommotors verwendet wird,
Fig. 2 eine Bremsansteuerung, bei der die Referenzspannung die Spannung an einem künstlichen Stempunkt ist und
Fig. 2a eine Bremsansteuerung mit separatem Bremsbaustein.

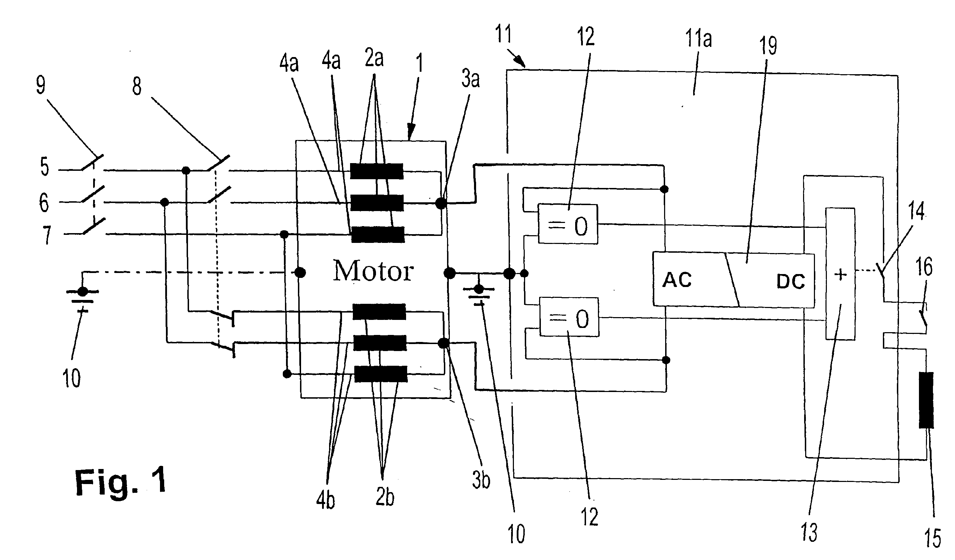

Fig. 1 zeigt einen Dreiphasendrehstrommotor 1 eines Antriebs für ein Hebezeug (nicht gezeigt). Der Dreiphasendrehstrommotor 1 ist als polumschaltbarer Motor ausgebildet; er weist folglich jeweils drei wechselweise umschaltbare Motorwicklungen 2a, 2b auf. Diese drei Motorwicklungen 2a, 2b sind jeweils in einem Sternpunkt 3a, 3b zusammengeschaltet. Die den Sternpunkten 3a, 3b abgewandten freien Wicklungsanschlüsse 4a, 4b sind jeweils elektrisch mit den drei Phasen 5, 6, 7 einer Drehstromversorgung verbunden.

Zur Polumschaltung dient ein Wechselschalter 8.

Die Ein- und Ausschaltung der Drehstromversorgung erfolgt mit dem Ein- und Ausschalter 9. Weiter ist der Motor über einen Anschluss 10 geerdet.

Zum Bremsen und Halten der Last ist der Antrieb mit einer elektrisch ansteuerbaren mechanischen Motorbremse, hier schematisch dargestellt als Schaltlogik 11 und Wicklung des Bremsmagneten 15, ausgestattet, die in Fig. 1 als Schaltbild einer Bremsansteuerung 11a dargestellt ist.

Fig. 1 zeigt die Bremsansteuerung 11a, bei der die Sternpunkte 3a, 3b mittels einer Vergleichsschaltung 12 jeweils mit einer vorgegebenen Referenzspannung verglichen wird.

In ihrer konstruktiv einfachsten Ausgestaltung gemäß Fig. 1 ist diese Referenzspannung die von den Motorwicklungen 2a, 2b völlig unabhängige Spannung am Erdpunkt 10.

Bei Überschreiten eines vorgegebenen Schwellwerts gibt die Vergleichsschaltung ein logisches Spannungssignal ab, welches eine Schalteinheit 13 steuert, um einen Schalter 14 zu schließen und damit die Motorbremse (11, 15) einzuschalten. Die Motorbremse (11, 15) ist in Fig. 1 nur schematisch als Bremswicklung 15 dargestellt. Ein Schalter 16 wird zum Lüften der Motorbremse (11, 15) in bekannter Weise zusammen mit dem Ein- und Ausschalter 9 geschaltet (Standardschützverdrahtung).

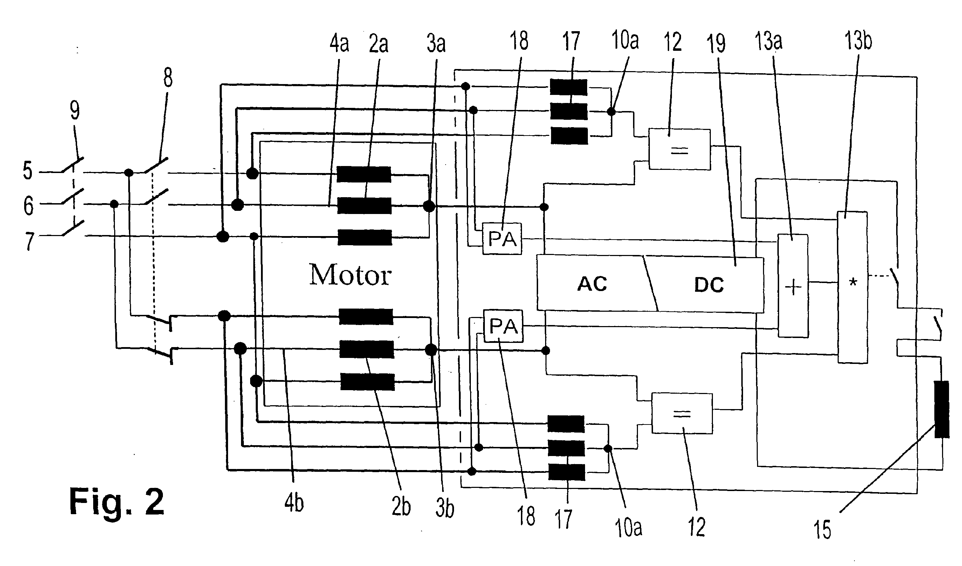

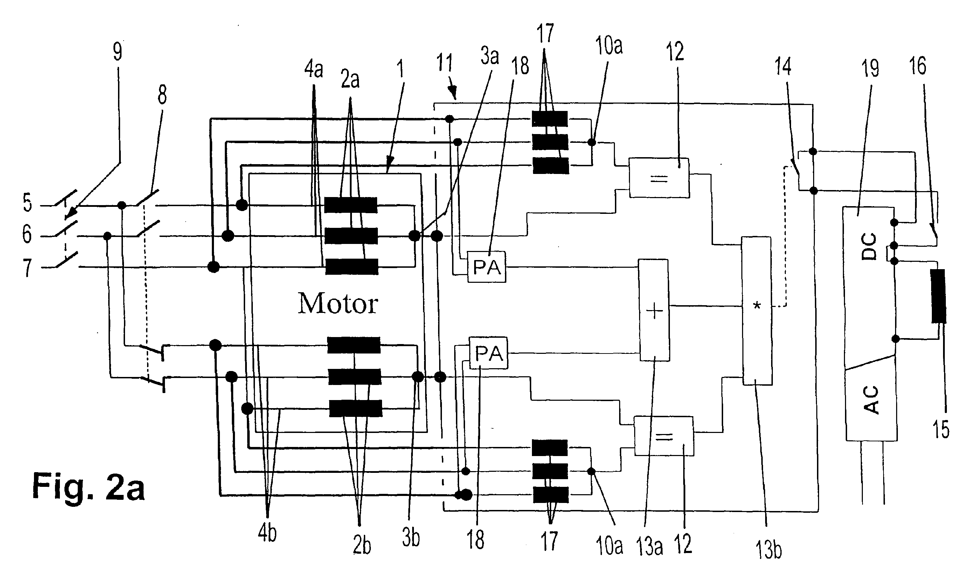

Fig. 2 zeigt eine Bremsansteuerung 11a bei der im Unterschied zu Fig. 1 die Referenzspannung nicht die am Erdpunkt 10, sondern die an einem zusätzlichen künstlichen Stempunkt 10a ist.

Der künstliche Sternpunkt 10a wird durch drei induktivitäten 17 gebildet, die sternförmig an die Drehstromversorgung 5, 6, 7 angeschlossen sind.

Dabei lassen sich keine Phasenausfälle mehr erfassen, weshalb zusätzlich eine Phasenausfallerkennung 18 erforderlich ist. Die Phasenausfallerkennungen 18 und die Vergleichsschaltungen 12 sind wiederum über logische Einheiten 13a, 13b derart zusammengeschaltet, dass bei anstehen eines logischen Schaltsignals der Schalter 14 und damit die Motorbremse (11, 15) gelüftet wird. Zur Bereitstellung des Schaltstroms für die Gleichstrommotorbremse (11, 15) ist ein Bremsgleichrichter 19 entsprechend an die Sternpunkte 3a, 3b der Motorwicklungen 2a, 2b angeschlossen.

Eine modifizierte Bremsansteuerung 11a zeigt Fig. 2A, wobei der Bremsgleichrichter 19 separat angeordnet und ausgeführt ist.

Die Phasenausfallerkennung 18 vergleicht dabei die Spannung von zwei Phasen 6, 7 der Drehstromversorgung miteinander und schaltet die Motorbremse (11, 15) bei Überschreiten eines vorgegebenen Differenzwertes ein.

Selbstverständlich lassen sich die Ausführungsbeispiele gemäß Fig. 1 - Fig. 2A auch so auslegen, dass nicht ein Überschreiten eines vorgegebenen Schwellwertes bzw. Differenzwertes das Einschalten der Motorbremse (11, 15) bewirkt, sondern ein Unterschreiten des jeweiligen Wertes.

### Bezugszeichenliste

- 1: Dreiphasenmotor
- 2a: Motorwicklung
- 2b: Motorwicklung
- 3a,3b: Sternpunkt
- 4a,4b: Wicklungsanschluss
- 5,6,7: Phase / Drehstromversorgung
- 7: Phase / Drehstromversorgung
- 8: Wechselschalter
- 9: Ausschalter
- 10: Anschluss / Erdpunkt
- 10a: künstlicher Stempunkt
- 11: Schaltlogik
- 11a: Bremsansteuerung
- 12: Vergleichsschaltung
- 13: Schalteinheit
- 13a,13b: logische Einheit
- 14: Schalter
- 15: Wicklung des Bremsmagneten
- 16: Schalter
- 17: Widerstand
- 18: Phasenausfallerkennung
- 19: Bremsgleichrichter

## Patentansprüche

1. Antrieb für ein Hebezeug mit einem drei Motorwicklungen (2a, 2b) aufweisenden Dreiphasendrehstrommotor,
mit einer Drehstromversorgung, deren drei Phasen (5, 6, 7) an die in einem Sternpunkt (3a, 3b) zusammengeschalteten drei Motorwicklungen (2a, 2b) anschließbar sind, und mit einer elektrisch ansteuerbaren mechanischen Motorbremse ,
**dadurch gekennzeichnet,**
**dass** eine Vergleichsschaltung (12) vorgesehen ist, welche die Spannung am Sternpunkt (3a, 3b) jeweils mit einer von den Motorwicklungen (2a, 2b) unabhängigen Referenzspannung vergleicht und bei Überschreiten eines vorgegebenen Schwellwerts die Motorbremse einschaltet.

2. Antrieb nach Anspruch 1,
**dadurch gekennzeichnet,**
**dass** die Referenzspannung die Spannung am Erdpunkt (10) des Dreiphasendrehstrommotors (1) ist.

3. Antrieb nach Anspruch 1,
**dadurch gekennzeichnet,**
**dass** die Referenzspannung die Spannung eines zusätzlichen Sternpunkts (10a, 10b) ist, der aus den drei Phasen der Stromversorgung (5, 6, 7) gebildet wird, und
**dass** zusätzlich eine Phasenausfallerkennung (18) vorgesehen ist.

4. Antrieb nach Anspruch 3,
**dadurch gekennzeichnet,**
**dass** die Phasenausfallerkennung (18) die Spannung von allen Phasen der Drehstromversorgung (5, 6, 7) überwacht und bei Ausfall die Motorbremse einschaltet.

5. Antrieb nach einem der Ansprüche 1 bis 4,
**dadurch gekennzeichnet,**
**dass** die Ergebnisse der Vergleiche mittels einer logischen Schaltung zusammengeführt sind, welche die Motorbremse bei Überschreiten von mindestens einem Differenz- oder Schwellwert einschaltet.
